# EUROPEAN PATENT APPLICATION

(11) **EP 4 603 714 A2**
(43) Date of publication of application: **20.08.2025**
(21) Application number: 25186340.3
(22) Date of filing: 25.03.2020
(51) Int. Cl.: F16B 13/00

(54) **A FIXATION DEVICE**

(30) Priority: 05.04.2019 GB 201904850
(62) Divisional of application: 20716889.9
(71) Applicant: Raptor Anchoring Limited, Orkney, KW15 1RG (GB)
(72) Inventor: VASEY, Alan, Newcastle, NE25 9HS (GB)
(74) Representative: Sewell, Adrian David

(57) **Abstract**

The present application describes a fixation device (100) comprising an elongate inner member (102) rotatable about a longitudinal axis (120) and having at least one first cutting element (114) at an open distal end region (108) thereof, a guide body (118) located on the inner member having a tapered guide surface which tapers outwardly towards the distal end region, an elongate and hollow outer sleeve (104) mounted on the inner member and rotatable about the longitudinal axis and translatable with respect to the inner sleeve, and a flareable end formation (350) located at an open distal end region of the outer sleeve and comprising at least one second cutting element, wherein the flareable end formation is configured to flare outwardly towards a deployed position when moved over the tapered guide surface of the guide body, wherein the flareable end formation comprises a plurality of finger elements each rotatable with respect to the outer sleeve about a hinge axis defined by a pin-less coupling arrangement.

## Description

The present invention relates to a fixation device for anchoring a structure to a substrate. In particular, but not exclusively, the present invention relates to a self-boring anchor and pile device for securing a structure to a substrate, such as an offshore structure to the sea bed.

It is known to anchor, for example, a tidal power machine, to the seabed using a self-boring anchor, such as described in WO2016/092322. The anchor described therein comprises a substantially solid shaft or anchor stem having a drill head at its distal end. The drill head has a cutting tip and a frustoconical outer surface. A sleeve or outer casing having hinged articulated fingers at its distal end is axially slidable on the shaft such that the articulated fingers are selectively movable over the drill head of the shaft and flare outwardly as the sleeve moves towards the distal end. Each finger has a cutter on its tip to thereby form an undercut in the substrate when the sleeve is axially moved in the distal direction along the shaft. The undercut prevents the anchor from being withdrawn from the hole when it is subjected to a tensile load.

However, this form of anchor is limited in relation to its size, scalability and applicability. For example, if a relatively large-scale application required the anchor to have a diameter of around 1m, the volume of substrate to be removed would be around 2.36m³ based on the anchor being around 3m long, which would be inefficient, time and energy consuming, and costly, and therefore often not commercially viable or possible, particularly if the substrate is hard rock. The anchor is also not suitable for use in relatively soft substrate, such as a sand. Furthermore, the configuration and hinge pin coupling of the hinged fingers limits the minimum size the anchor can be which further limits the range of applications for the anchor.

It is an aim of certain embodiments of the present invention to provide a fixation device for securing an offshore structure to the seabed which is scalable in size and which resists tensile, compressive and lateral loading, and a combination thereof.

It is an aim of certain embodiments of the present invention to provide a fixation device for securing an offshore structure to the seabed which is relatively quick to install in a substrate and which requires less energy to install than conventional fixation devices, particularly into relatively hard substrate.

It is an aim of certain embodiments of the present invention to provide a fixation device for securing an offshore structure to the seabed which includes hinged articulated cutting fingers configured to not limit the minimum size the anchor can be and in turn not limit the range of applications for the anchor.

According to a first aspect of the present invention there is provided a fixation device comprising:
an elongate inner member rotatable about a longitudinal axis and having at least one first cutting element at an open distal end region thereof;
a guide body located on the inner member having a tapered guide surface which tapers outwardly towards the distal end region;
an elongate and hollow outer sleeve mounted on the inner member and rotatable about the longitudinal axis and translatable with respect to the inner sleeve; and
a flareable end formation located at an open distal end region of the outer sleeve and comprising at least one second cutting element, wherein the flareable end formation is configured to flare outwardly towards a deployed position when moved over the tapered guide surface of the guide body;
wherein the flareable end formation comprises a plurality of finger elements each rotatable with respect to the outer sleeve about a hinge axis defined by a pin-less coupling arrangement.

Optionally, the pin-less coupling arrangement comprises a curved hinge surface of each finger element and a correspondingly curved surface in a coupling member coupled to the outer sleeve.

Optionally, the coupling member comprises a sleeve member having a circumferential groove defining the curved surface for engagement the curved hinge surface of each finger element.

Optionally, the coupling member is axially moveable with respect to the outer sleeve.

Optionally, the coupling member is rotationally constrained to the outer sleeve.

Optionally, each finger element comprises a longitudinal channel extending at least partially along an outer surface of the finger element.

Optionally, the longitudinal channel extends into the free end to define a pair of spaced apart cutting surfaces.

Optionally, the outer surface of each finger element comprises a pair of laterally opposed channels extending from the longitudinal channel to each side of the finger element.

Optionally, each finger element comprises opposed tapered side faces.

According to a second aspect of the present invention there is provided a method of installing a fixation device in a substrate, comprising:
rotating an elongate inner member about a longitudinal axis to bore a hole in a substrate with at least one first cutting element located at an open distal end region of the inner member;
translating an elongate and hollow outer sleeve distally along the inner member to move a flareable end formation located at an open distal end region of the outer sleeve over a tapered guide surface of a guide body located on the inner member to thereby flare the end formation outwardly towards a deployed position; and
rotating the outer sleeve about the longitudinal axis to form an undercut in a wall of the bored hole with at least one second cutting element of the flareable end formation,
wherein flaring the end formation comprises urging each of a plurality of finger elements outwardly about a hinge axis defined by a pin-less coupling arrangement.

Optionally, urging comprises rotating a curved hinge end region of each finger element located in a curved recess of a coupling member coupled to the outer sleeve.

Optionally, the method comprises providing the curved recess by a circumferential groove of the coupling member in which the curved hinge end regions of the finger elements are engaged.

Optionally, the method comprises axially moving the coupling member with respect to the outer sleeve.

Optionally, the method comprises rotationally constraining the coupling member to the outer sleeve.

### Description of the Drawings

Certain embodiments of the present invention will now be described with reference to the accompanying drawings in which:
Figure 1a illustrates a side view of a fixation device according to certain embodiments of the present invention in a retracted state;
Figure 1b illustrates a cross sectional side view of the fixation device of Figure 1a in the retracted state;
Figure 2a illustrates a side view of the fixation device of Figures 1a and 1b in a deployed state;
Figures 2b and 2c illustrate a cross sectional side view of the proximal and distal end regions of the fixation device of Figure 2a in the deployed state;
Figure 3a illustrates a side view of the travel sleeve of the device of Figures 1a to 2c supporting a plurality of finger elements mounted therein;
Figure 3b illustrates a cross section through one of the finger elements mounted in the travel sleeve;
Figures 4a and 4b illustrate one of the finger elements of Figures 3a and 3b;
Figure 5a illustrates a further embodiment of the fixation device according to the present invention; and
Figures 5b and 5c illustrate a cross sectional side view of the distal and proximal end regions the fixation device of Figure 5a when in the retracted state.

### Detailed Description

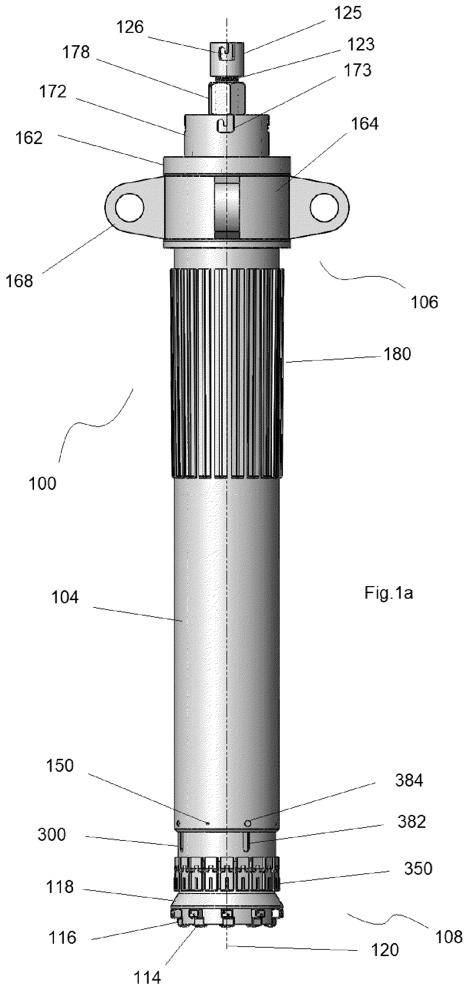

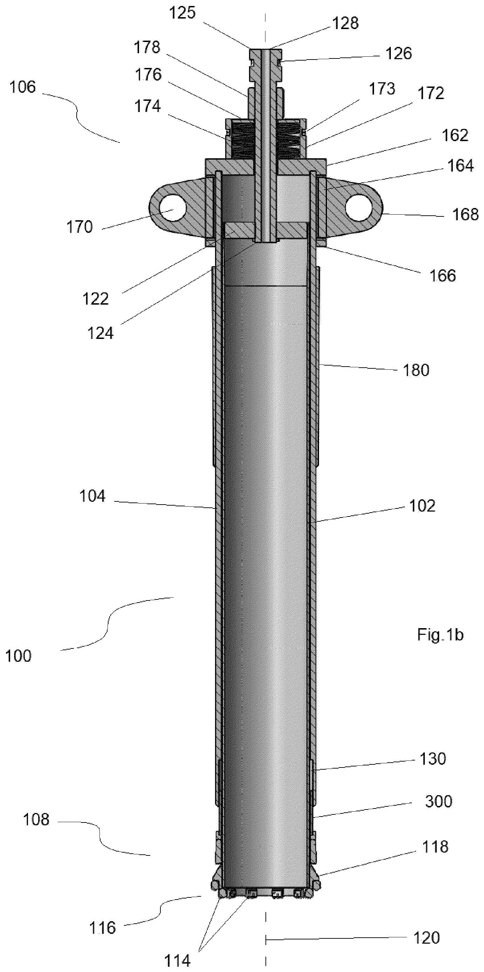

As illustrated in Figures 1a and 1b, a fixation device 100 includes an inner sleeve 102 and an outer sleeve 104 mounted thereon. Each sleeve has a proximal end region 106 and a distal end region 108 relative to the surface of a substrate, such as the seabed, when the device is in situ. The distal end region of each sleeve is substantially open. The inner and outer sleeves 102,104 are coupled together for a first mode of operation by at least one shear pin (not shown), aptly a pair of diametrically opposed shear pins, aptly located near their distal end regions.

A drill head 116 is mounted on the distal end region of the inner sleeve 102 and includes a plurality of cutting elements 114 to form a pilot drill bit. Each cutting element 114 may comprise any suitable material for drilling a substrate, such as a diamond impregnated cutting element, a tungsten cutting element, a hardened steel cutting element, a polycrystalline diamond cutting element, or the like. The drill head 116 also includes a guide body in the form of a tapered collar portion 118 defining a tapered outer surface which tapers inwardly towards a longitudinal axis 120 of the device and in a direction towards the proximal end region. The tapered collar portion 118 may be fixed to the distal end of the inner sleeve or may be rotatable relative thereto, as further described below.

The distal end region of the outer sleeve 104 includes a circumferential undercut 130 extending axially in the proximal direction along its inner surface from the distal end.

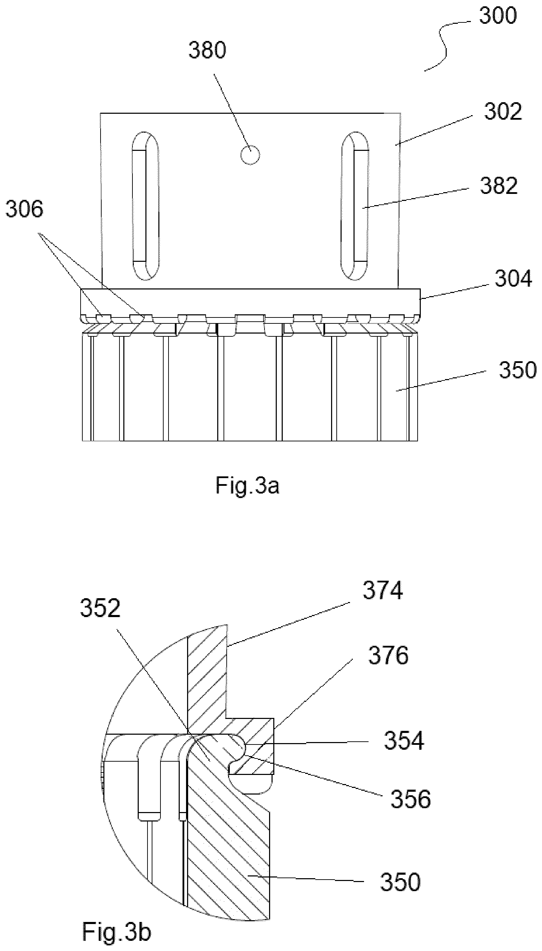

The circumferential undercut 130 is configured to slidably accommodate a travel sleeve 300 as illustrated for example in Figure 3a.

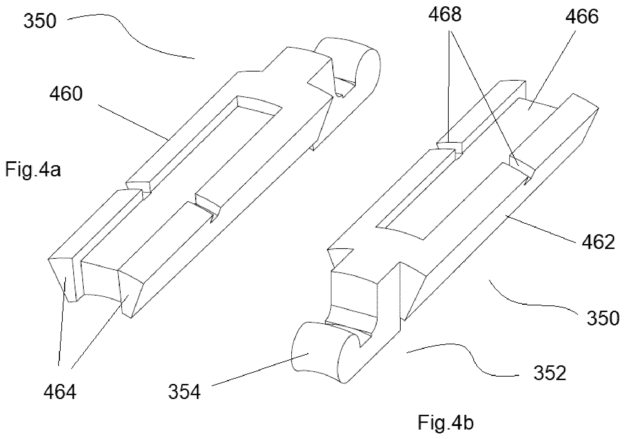

As illustrated in Figure 3a, the travel sleeve 300 includes a proximal end portion 302 which is sized to slidably engage in the circumferential undercut 122 of the outer sleeve 104, and a distal end portion 304 which has a larger radius than the proximal end portion 302. The distal end portion 304 is castellated such that it includes a plurality of equally sized and circumferentially spaced notches 306 around its distal end. Each notch 306 has a base surface and opposed and substantially parallel inner wall surfaces configured to receive a hinge end portion 352 of a respective finger element 350, as illustrated in Figures 3b, 4a and 4b.

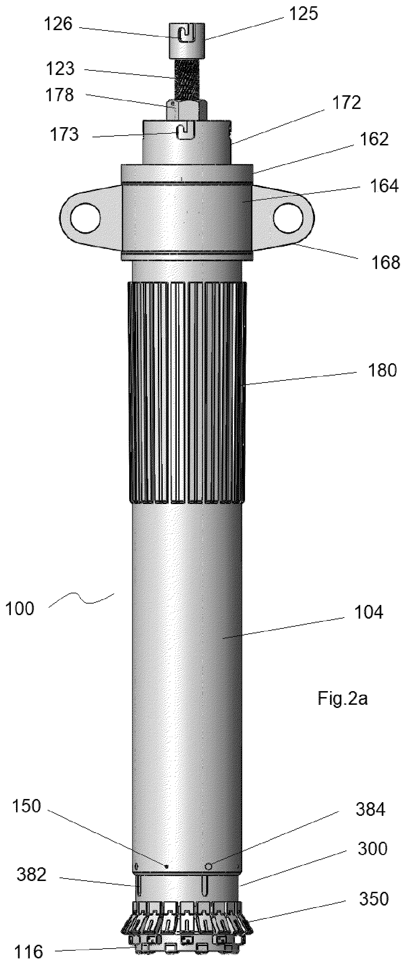

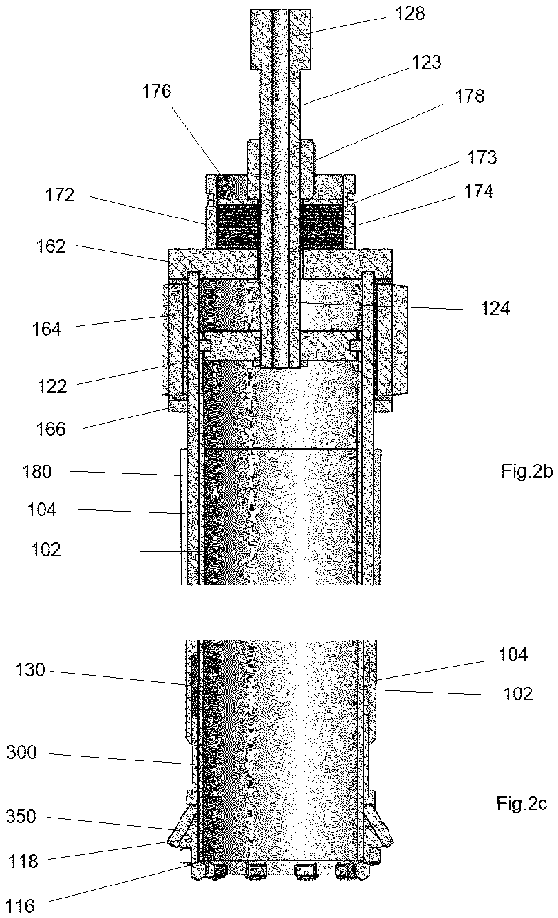

As illustrated in Figures 4a and 4b, the opposed outer surfaces of the hinge end portion 352 of each finger element 350 are substantially parallel such that they slidably engage with the inner wall surfaces of a respective one of the notches 306 when moving from a retracted position (Figure 3a) to a deployed position (Figure 2c). The hinge end portion 352 of each finger element 350 terminates with a substantially curved hinge surface 354 which locates in a correspondingly curved circumferential recess 356 disposed in the inner surface of the travel sleeve 300 and proximal to the base of each notch 306. The engagement between the curved hinge surface 354 of each finger element 350 and the curved recess 356 of the travel sleeve 300 is illustrated in Figure 3b. This arrangement radially retains the hinge end portion 352 of each finger element 350 in the travel sleeve 300, whilst allowing each finger element 350 to rotate outwardly towards the deployed position (as illustrated in Figures 2a and 2c) about a hinge axis defined by the curved hinge surface 354. Aptly, the radius of the curved hinge surface 354 is around 12mm. This pin-less coupling arrangement allows the finger elements to be efficiently located into the travel sleeve when assembling the fixation device and also efficient removal of each finger for easy and quick maintenance and reduced downtimes. One or more finger elements can be interchanged and easily removed and replaced if needed. The pin-less arrangement reduces the number of components required and also reduces frictional effects, e.g. wear, and related maintenance issues. The pin-less finger coupling also allows the fixation device to be scaled down to relatively small diameters which allows the device to be used for more technical applications than a conventional anchor device. The finger elements can be located relatively close together which in turn provides a greater cutting area. The bearing area about which each finger element rotates is also increased providing additional strength in that area of the coupling. Desirably, this pin-less finger coupling arrangement may be used on other forms of anchor device, such as the anchor described in WO2016/092322.

As illustrated in Figures 4a and 4b, each finger element 350 has an elongate body portion 460 having substantially tapered side faces 462 to allow adjacent finger elements 350 to rotate inwardly to a retracted position without clashing. Each finger element 350 has at least one cutting surface 464 at its free end which may be provided by a cutting element mounted to the finger element or by an integral part of the finger element itself. Each finger element may also have a cutting surface extending along one or both side faces 462. Each cutting surface/s 464 may comprise any suitable material, such as a diamond impregnated cutting surface, a tungsten cutting surface, a hardened steel cutting surface, a polycrystalline diamond cutting surface, or the like. The outer surface of the body portion 460 includes a longitudinal channel 466 extending at least partially along its length and a pair of opposed lateral channels 468 extending from the longitudinal channel 466 to each tapered side face 462. These channels allow for drilled/reamed material to move away from the cutting surface/s during a drilling operation. Alternatively, the channels may be used to locate and attach separate cutting elements to the finger element.

As illustrated in Figure 3a, the travel sleeve 300 includes a plurality of holes 380 in its proximal end portion 374. Aptly, the travel sleeve 300 has four holes circumferentially and equally spaced around the sleeve. Each hole 380 is configured to receive a shear pin 150 (as illustrated in Figures 1a and 2a) locatable in a respective corresponding hole in the outer sleeve 104 of the fixation device 100. These shear pins 150 axially and rotationally retain the travel sleeve 300 with respect to the outer sleeve 104 during a first mode of operation of the fixation device 100, as will be described further below.

The proximal end portion 374 of the travel sleeve 300 further includes a plurality of axially oriented slots 382 each located between adjacent ones of the shear pin holes 380. These slots 382 slidably engage with a respective pin 384 inwardly extending from the outer sleeve 104 (as illustrated in Figures 1a and 2a). These pin and slot arrangements rotationally constrain the travel sleeve 300 with respect to the outer sleeve 104 during the first mode of operation whilst allowing the outer sleeve 104 to move axially with respect to the travel sleeve 300 during a later mode of operation, as described further below. An alternative mechanical arrangement to the pin and slot arrangement may be used to rotationally constrain the travel sleeve 300 with respect to the outer sleeve 104 whilst allowing the same to move axially, such as a key, spline, or the like.

As illustrated in Figures 1b and 2b, the proximal end region of the inner sleeve 102 is closed by an end cap 122 fixed thereto by welding or the like. A shaft 124 extends axially in the proximal direction from the end cap 122. The shaft 124 is located in a central aperture in the end cap 122 and is fixed thereto by welding or the like. The shaft 124 includes an axial through bore 128 to allow a fluid, e.g. water, to be pumped into the inner sleeve to aid the drilling process and/or to remove drilled material from the drill head 110. At least the proximal end region of the shaft 124 comprises an external screw thread 123 to engage with a tensioning nut 178. The proximal end region of the shaft 124 also includes an enlarged head portion 125 having a bayonet coupling portion 126 to allow a drive tool of, for example, a drill rig to couple to the proximal end of the shaft 124 and rotatably drive the inner sleeve 102. Alternatively, other suitable means of coupling a rotational drive tool to the shaft may be used, such as a hex or square section head portion.

As illustrated in Figures 1a and 1b, the proximal end region of the outer sleeve 104 is closed by an end cap 162 fixed thereto by welding or the like. The end cap 162 extends outwardly beyond the outer sleeve wall to provide a shoulder region for a swivel collar 164 to engage. An annular flange 166 is provided below the swivel collar for the same to also engage such that the end cap 164 and flange 166 axially constrain the swivel collar 164 with respect to the outer sleeve 104 whilst allowing the swivel collar to rotate with respect to the outer sleeve 104. A bearing element may be provided between the swivel collar and the outer sleeve to reduce any frictional effects. The swivel collar 164 includes a plurality of outwardly extending lugs 168, in this case four lugs, each having a hole 170 for attaching one or more tethers to the fixation device 100 when in situ. The rotatable swivel collar 164 allows for some movement of the tether/s with respect to the fixation device, e.g. as a result of a floating or subsea structure being moved by waves, tidal streams, wind, or the like.

The end cap 162 on the outer sleeve 104 further includes a through hole to allow the shaft 124 coupled to the inner sleeve 102 to pass through the end cap 162. The end cap 162 also includes a hollow cylindrical portion 172 mounted on the upper surface of the wider flanged portion of the end cap to thereby define an end cap having a top-hat cross section, as illustrated for example in Figure 2b. The cylindrical portion 172 of the end cap 162 includes a bayonet coupling portion 173 in its outer surface on opposed sides to allow a suitable rotational drive tool, e.g. of a drill rig, to couple to the end cap and rotatably drive the outer sleeve. Other suitable torque coupling arrangements can be used, as described above, e.g. a hex or square drive head or the like. The cylindrical portion 172 houses a stack of spring washers 174 located on the upper surface of the flanged portion and the shaft 124. A moveable disc element 176 having a central aperture is provided on the stack of spring washers 174 and the shaft 124. A tensioning nut 178 is located on the threaded portion 123 of the shaft 124 such that when the nut 178 is driven in a first rotational direction, the shaft 124 and inner sleeve 102 coupled thereto are drawn upwardly with respect to the outer sleeve 104. The spring washers 174 compress when a tensional load is imparted in the fixation device 100 when in situ, as described further below.

A plurality of longitudinally oriented and tapered ribs 180 are circumferentially arranged and equally spaced around the proximal end region of the outer sleeve 104 and below the swivel collar 164. These ribs cut a proximal taper in the substrate as the outer sleeve is being rotatably driven therein which provides the fixation device 100 with additional lateral resistance when in situ and also reacts against the opposed distal taper formed by the finger elements 350 when in a deployed state and when a tensional force is imparted in the device, as described further below. Aptly, each rib 180 provides a cutting surface comprising a suitable cutting material, such as diamond, tungsten, or the like.

In use, a first drive tool, of for example a drill rig, is coupled to the outer sleeve 104 by way of the bayonet coupling portion 173 and a second drive tool, of the for example the drill rig, is coupled to the inner sleeve 102 by way of the bayonet coupling portion 126 of the shaft 124. The inner and outer sleeves 102,104 are rotated in a first direction, e.g. clockwise, by their respective drive tools to start drilling a pilot hole in a substrate, e.g. the seabed, by the drill head 116 mounted on the distal end of the inner sleeve 102. Alternatively, only one of the sleeves may be rotated which would rotate the other sleeve in view of the shear pin coupling the sleeves together. The finger elements 350 are in the retracted position, as illustrated in Figures 1a and 1b, and are within the outer limits of the drill head 116 so trail unaffected behind the drill head 116 into the circular hole being formed thereby in the substrate. The first drilling operation is stopped when the fixation device reaches a desired depth in the substrate, e.g. when the tops of the ribs 180 are just below the substrate surface. Alternatively, when the fixation device reaches a desired depth in the substrate, the ribs may protrude above the surface of the substrate by a distance which is around the same as the length of each finger element.

In a second mode of operation, the first drive tool then rotatably drives the outer sleeve 104 with respect to the inner sleeve 102 and a downward force is also applied to the outer sleeve which compromises the integrity of the at least one shear pin coupling the inner and outer sleeves together. Downward axial movement of the outer sleeve 104 moves the travel sleeve 300 and finger elements 350 downwardly in the distal direction such that the finger elements 350 move over the tapered outer surface of the flared collar portion 118 and outwardly to a deployed position, as illustrated in Figures 2a and 2c. The upper ribs 180 move axially the same distance into the substrate as the fingers do in view of both being coupled to the outer sleeve. This brings the ribs below the surface if they protruded slightly above the surface before the second mode of operation commenced.

In a subsea application, the void between the distal end cap 122 and the proximal end cap 162 may fill with water in view of the interface between the central aperture in the proximal end cap 162 and the shaft 124 not being sealed. To prevent this, a seal may be provided at this interface. Alternatively, it may be desirable to allow water to enter into this void. The interface between the distal end cap 122 and the inner surface of the outer sleeve 104 may be sealed with, for example, an O-ring to prevent water entering between the inner and outer sleeves 102,104. The diameter of the central aperture in the proximal end cap 162 may be selected to allow water to exit the void at a predetermined rate to thereby allow the outer sleeve 104 to controllably move axially with respect to the inner sleeve when the shear pins are broken. Additionally, or alternatively, one or more apertures/valves may be provided in the proximal end cap 162 to allow water to enter and/or exit the void in a predetermined to ensure the outer sleeve 104 moves axially in the distal direction in a controlled manner when the shear pins are intentionally broken. Such an arrangement may be desirable if the drive coupling to the outer sleeve was axially unsecure, such as a drive tool on a hex section drive nut, and not an axially secure arrangement, such as a bayonet coupling.

In view of the outer sleeve 104 being rotated during said axial movement, the cutting surfaces of the finger elements 350 form a tapered annular undercut in the substrate. The shear pin 150 and pin and slot arrangements 382,384 coupling the travel sleeve 300 to the outer sleeve 104 ensure the travel sleeve and finger elements rotate and translate with the outer sleeve as it moves downwardly along the inner sleeve. The tapered collar portion 118 may be fixed with respect to the inner sleeve 102 or it may be rotationally mounted thereto to allow the same to rotate with the finger elements 350 as they form the undercut in the substrate. Allowing the tapered collar portion to rotate with the finger elements reduces/eliminates undesirable frictional effects, such as heat, wear, noise or the like, otherwise caused when the finger elements 350 rotate over a fixed tapered collar portion 116. Furthermore, less energy is required to form the tapered undercut if friction between the finger elements and the tapered collar portion are minimised. The undercut formed by the deployed finger elements 350 secures the device 100 in the substrate and prevents the device being pulled out of the substrate when subjected to a tensional load.

In a third mode of operation, the first drive tool or a further drive tool is then engaged with the tensioning nut 178 and rotated whilst the shaft is rotationally fixed to move the nut down the shaft 124 and urge the same against the disc plate 176. This action draws the inner sleeve 102 axially upwardly such that the tapered collar portion 118 is further forced against the deployed finger elements 350 to further secure them in the formed tapered undercut. As the inner sleeve is unable to move upwardly when the tensioning nut 178 is tightened in view of the engagement of the tapered collar portion 116 with the deployed finger elements 350 in the tapered undercut, a tension is applied in the inner sleeve 102 and the outer sleeve 104 is urged downwardly which causes the shear pins 150 coupling the travel sleeve 300 to the outer sleeve 104 to fail and thus allows the outer sleeve 104 to move axially towards the distal drill head 116. This movement is resisted by a reaction force applied by the compressed disc springs 174 which acts to further secure the fixation device 100 in the substrate and to withstand loads applied in use to the fixation device in all directions via the lugs 168. The tapered ribs 180 also act to withstand a downward movement of the outer sleeve 104 and provides for lateral resistance of the fixation device in use.

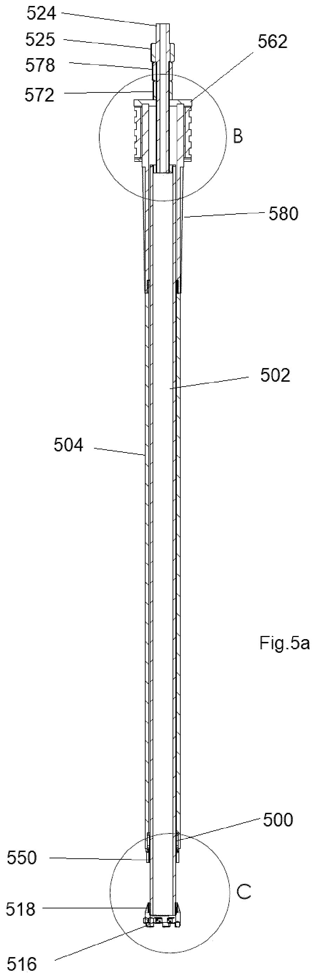

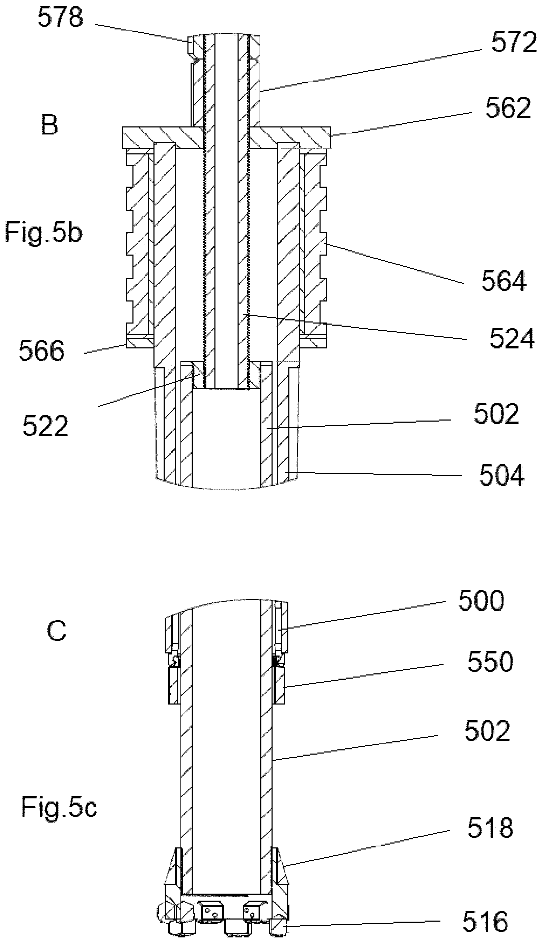

A further embodiment of the fixation device is illustrated in Figures 5a to 5c. The fixation device 500 includes an inner sleeve 502 and an outer sleeve 504. The proximal end region of the outer sleeve is closed by an end cap 562 fixed thereto by welding or the like and which is substantially disc-like and has a central aperture for accommodating the shaft 524 fixed to the inner sleeve 502 via the inner sleeve end cap 522. A swivel collar 564 (lug/s not shown) is mounted between the end cap 562 and a flange 566. A tapered section 580 of the outer sleeve 504 equivalent to the tapered ribs 180 of the above-described embodiment may connect to the lower section of the outer sleeve 504 by a reverse screw thread configured to tighten during the drilling operations.

A first square section drive nut 572 is fixed by welding or the like to the end cap and threadably mounted on the shaft 524 such that rotation of the drive nut rotates the outer sleeve 104. A square section tensioning nut 578 is located on the shaft 524 above the first drive nut 572 and below a second drive nut 525 fixed to the proximal end of the shaft 524 which also has a square section.

In use, the drive nuts 572,525 and tensioning nut 578 are aligned to allow a drive tool, of for example a drill rig, to engage over and rotate all three components together in a first rotational direction, e.g. clockwise. The fixation device 500 is rotated about its axis to thereby form a pilot hole in the substrate to a desired depth using the drill head 516 mounted on the distal end of the inner sleeve 502. The first drive nut 572 is then rotated whilst an axial force is applied to the proximal end cap 562 to thereby rotate the outer sleeve 504 and move the same and the finger elements 550 downwardly in the axial direction with respect to the inner sleeve 502. The finger elements 550 are moved over the flared collar portion 518 and outwardly to the deployed position whilst rotating to form a tapered undercut in the substrate wall of the drilled hole. The tensioning nut 578 is then tightened to urge the inner sleeve 502 upwardly and apply a tension therein, whilst urging the outer sleeve 504 downwardly which breaks the shear pins (not shown) coupling the travel sleeve 500 to the outer sleeve 504. The pin/slot arrangement, as described above, allows the outer sleeve 504 to move downwardly, albeit by a relatively small distance, over the travel sleeve 500 to further apply the tensional load in the fixation device 500.

If the fixation device 100,500 needs removing from the substrate, the tensioning nut 178,578 is loosened to release the tensional load in the device and relieve the secure engagement between the finger elements 550 and the tapered undercut in the substrate. The outer sleeve 104,504 is then lifted upwardly until each pin (e.g. 384 in Figure 2a) engages with the upper limit of its respective slot (e.g. 382 in Figure 2a) which thereby pulls the travel sleeve 300,500 and finger elements 550 upwardly. Engagement of the finger elements 550 with the drilled hole wall moved them back into the retracted position to allow the fixation device to pulled out of the drilled hole in the substrate.

The square section drive nuts 572,525 may alternatively have other suitable cross sections such as hexagonal or means to couple to the or a respective drive tool. Further alternatively, the second drive nut 525 may not be fixed to or be an integral part of the shaft 524. Instead, the second drive nut 525 may be a separate component coupled to the proximal end of the shaft 524 by a splined engagement. The second drive nut 525 may be axially secured to the shaft 524 by at least one shear pin/screw such that, in the event of a power supply failure to the drive tool/drill rig, the nut can be sheared off the shaft to recover the drive tool/drill rig otherwise coupled to the fixation device. The drill rig may rely on an electrically, pneumatically, or hydraulically-operated mechanism to securely attach the drive head to the fixation device, particularly for forcing fluid, e.g. water, into the device via the bore in the shaft 524, and in the event of a power failure, safe and immediate release of the drill rig from the fixation device may not otherwise be possible.

As an example, the length of the illustrated fixation device 500 is aptly around 6000-7000mm. The swivel collar 564 is around 400mm long and around 450mm wide. The tapered section 580 of the outer sleeve 504 is around 1000mm long and the remaining distal portion of the outer sleeve is around 4410mm long. The distance between the finger elements 550 and the tapered surface of the flared collar portion 518 is around 320mm. The outer diameter of the outer sleeve 504 is around 273mm and the inner diameter of the inner sleeve 502 is around 153mm. The cutting diameter of the drill head 516 is around 293mm. The travel sleeve 500 is around 170mm long and the distal end portion 304 is around 273mm in diameter. The finger elements 550 are each around 116mm long and around 30mm thick. The radius of the curved hinge surface of each finger element is around 5mm. These dimensions are examples only and the fixation device 100,500 can be sized according to a particular application, such as having a diameter of from around 25mm to around 3m and/or a length of from around 100mm to around 12m.

Certain embodiments of the present invention therefore provide a fixation device for securing an offshore structure to a substrate which is scalable in size (length and/or diameter) to suit a particular application, e.g. type of substrate and/or structure to be anchored and/or site conditions) and which resists tensile, compressive and lateral loading, and a combination thereof. The fixation device is relatively quick to install in a substrate and requires minimal energy to install, particularly into a relatively hard substrate. The fixation device includes hinged articulated cutting fingers configured to not limit the minimum size the anchor can be and in turn not limit the range of applications for the anchor.

## Claims

1. A fixation device (100) comprising:
an elongate inner member (102) rotatable about a longitudinal axis (120) and having at least one first cutting element (114) at an open distal end region thereof;
a guide body (118) located on the inner member having a tapered guide surface which tapers outwardly towards the distal end region;
an elongate and hollow outer sleeve (104) mounted on the inner member and rotatable about the longitudinal axis and translatable with respect to the inner sleeve; and
a flareable end formation (350) located at an open distal end region of the outer sleeve and comprising at least one second cutting element, wherein the flareable end formation is configured to flare outwardly towards a deployed position when moved over the tapered guide surface of the guide body;
wherein the flareable end formation comprises a plurality of finger elements each rotatable with respect to the outer sleeve about a hinge axis defined by a pin-less coupling arrangement.

2. The fixation device according to claim 1, wherein the pin-less coupling arrangement comprises a curved hinge surface (354) of each finger element and a correspondingly curved surface (356) of a coupling member coupled to the outer sleeve.

3. The fixation device according to claim 2, wherein the coupling member comprises a sleeve member (300) having a circumferential groove (356) defining the curved surface for engagement with the curved hinge surface of each finger element.

4. The fixation device according to claim 2 or 3, wherein the coupling member is axially moveable with respect to the outer sleeve.

5. The fixation device according to claim 4, wherein the coupling member is rotationally constrained to the outer sleeve.

6. The fixation device according to any preceding claim, wherein each finger element comprises a longitudinal channel (466) extending at least partially along an outer surface of the finger element from a free end thereof.

7. The fixation device according to claim 6, wherein the longitudinal channel (466) extends into the free end to define a pair of spaced apart cutting surfaces (464).

8. The fixation device according to claim 7, wherein the outer surface of each finger element comprises a pair of laterally opposed channels (468) extending from the longitudinal channel to each side of the finger element.

9. The fixation device according to any preceding claim, wherein each finger element comprises opposed tapered side faces (462).

10. A method of installing a fixation device in a substrate, comprising:
rotating an elongate inner member (102) about a longitudinal axis (120) to bore a hole in a substrate with at least one first cutting element (114) located at an open distal end region of the inner member;
translating an elongate and hollow outer sleeve (104) distally along the inner member to move a flareable end formation (350) located at an open distal end region of the outer sleeve over a tapered guide surface of a guide body (118) located on the inner member to thereby flare the end formation outwardly towards a deployed position; and
rotating the outer sleeve about the longitudinal axis to form an undercut in a wall of the bored hole with at least one second cutting element of the flareable end formation,
wherein flaring the end formation comprises urging each of a plurality of finger elements outwardly about a hinge axis defined by a pin-less coupling arrangement.

11. The method according to claim 10, wherein urging comprises rotating a curved hinge end region (354) of each finger element located in a curved recess (356) of a coupling member (300) coupled to the outer sleeve.

12. The method according to claim 11, comprising providing the curved recess (356) by a circumferential groove of the coupling member in which the curved hinge end regions of the finger elements are engaged.

13. The method according to claim 11 or 12, comprising axially moving the coupling member (300) with respect to the outer sleeve (104).

14. The method according to claim 13, comprising rotationally constraining the coupling member (300) to the outer sleeve (104).
